(19) Europäisches Patentamt
European Patent Office
Office européen des brevets

(11) **EP 2 066 441 B1**

(12) **EUROPEAN PATENT SPECIFICATION**

(45) Date of publication and mention
of the grant of the patent:
**10.06.2020 Bulletin 2020/24**

(51) Int Cl.:
**B01D 53/86** [(2006.01)]   **B01J 23/63** [(2006.01)]
**B01J 23/652** [(2006.01)]

(21) Application number: **07829245.5**

(22) Date of filing: **28.09.2007**

(86) International application number:
**PCT/JP2007/069507**

(87) International publication number:
**WO 2008/041756 (10.04.2008 Gazette 2008/15)**

(54) **CATALYST FOR TREATING AN EXHAUST GAS CONTAINING ORGANIC ACID, AND METHOD FOR TREATING AN EXHAUST GAS CONTAINING ORGANIC ACID**

KATALYSATOR ZUR BEHANDLUNG EINES ABGASES MIT ORGANISCHER SÄURE SOWIE VERFAHREN ZUR BEHANDLUNG EINES ABGASES MIT ORGANISCHER SÄURE

CATALYSEUR DE TRAITEMENT DE GAZ D'ÉCHAPPEMENT CONTENANT UN ACIDE ORGANIQUE ET PROCÉDÉ DE TRAITEMENT DE GAZ D'ÉCHAPPEMENT CONTENANT UN ACIDE ORGANIQUE

(84) Designated Contracting States:
**FR**

(30) Priority: **05.10.2006 JP 2006273860**

(43) Date of publication of application:
**10.06.2009 Bulletin 2009/24**

(73) Proprietor: **Nippon Shokubai Co., Ltd.
Osaka-shi, Osaka 541-0043 (JP)**

(72) Inventor: **KUMA, Ryoji
Himeji-shi, Hyogo; 671-1282 (JP)**

(74) Representative: **Mai Dörr Besier
European Patent Attorneys
European Trademark Attorneys
Patentanwälte
Kreuzberger Ring 64
65205 Wiesbaden (DE)**

(56) References cited:
WO-A1-2006/095392    JP-A- 2001 246 230
JP-A- 2001 524 376    JP-A- 2003 200 050
US-A- 3 894 965    US-A- 5 292 704
US-A- 5 492 878    US-A- 5 895 636
US-B1- 6 207 120    US-B1- 6 458 741

EP 2 066 441 B1

**Description**

Technical Field:

The present invention relates to a catalyst for treating an exhaust gas containing an organic acid, a method for producing the same, and a method for treating an exhaust gas containing an organic acid. More specifically, the present invention relates to a catalyst which can be suitably used for treating an exhaust gas containing an organic acid, such as acetic acid, to be exhausted from a chemical plant or the like, a method for producing the same, and method for treating an exhaust gas containing an organic acid, such as acetic acid, by using this catalyst.

Background Art:

It has been generally well-known that an exhaust gas is treated by using a catalyst having a noble metal such as platinum supported on a carrier such as alumina. For example, in JP-A-2000-107602 discloses, as a catalyst for oxidation treating unburnt hydrocarbons in an exhaust gas containing an excess amount of oxygen, a catalyst having platinum and palladium supported on alumina which is obtained by first supporting platinum on alumina, calcining the supported alumina, and then further supporting palladium thereon. JP-A-2005-144321 discloses, as a catalyst for treating an exhaust gas containing a halogen compound, a catalyst having a platinum group element such as platinum, and an element belonging to group II in the periodic table, such as calcium, supported on an oxide such as alumina.

As a catalyst for decomposing an organic acid, such as acetic acid, contained in an exhaust gas to be exhausted from a chemical plant or the like, JP-A-2000-288347, for example, discloses a catalyst which comprises (A) an complex oxide of two or more members of metals selected among Ti, Si and Zr, (B) an oxide of at least one member of a metal selected among Cu, V, W and Cr, and (C) at least one member of a metal selected among Pd, Pt, Rh, Ir and Ru or the oxide thereof. Further, JP-A-2005-270872 discloses a catalyst having at least one member of a noble metal selected among Pt, Pd, Rh, Ru, Ir and Au supported on a titanium-based oxide.

Similar catalysts are also known from US-A-5 292 704, US-A-5 895 636, US-B-6 207 120, WO-A-2006/095392 and US-A-6 458 741.

US 5 492 878 A discloses catalysts for cleaning exhaust gases discharged from engines. Example 1 thereof shows a catalyst comprising:

- cordierite as a supporting refractory structure body;
- a layer of refractory oxide comprising activated alumina, and further comprising ceria, zirconia, and nickel oxide; and
- a noble metal comprising rhodium and platinum, which is impregnated into the refractory oxide layer.

Disclosure of Invention:

As for a catalyst which has been conventionally known in general, such those disclosed in the above publications, it cannot be said at present that performance thereof has been improved to such an extent as that it can decompose an organic acid such as acetic acid in an exhaust gas to an industrially satisfactory level efficiently over a long period.

In particular, according to JP-A-2000-288347, a catalyst is produced by adding an aqueous solution containing the catalyst component (B) to the complex oxide, forming the resultant mixture in a honeycomb shape by using an extruder, drying and calcining the formed product; or by forming the complex oxide in a honeycomb shape, and subsequently immersing the formed product into an aqueous solution of the catalyst component (B), drying and calcining it, and further immersing the calcined product into a solution of noble metal. In addition, also according to JP-A-2005-270872, similarly as in the above JP-A-2000-288347 , a catalyst is produced by adding and mixing an aqueous solution of an active catalyst component source to a titanium-based oxide powder, evaporating moisture by heating while kneading to make a extrudable paste-like form, forming the paste in a honeycomb shape by using an extruder, then drying and calcining it; or by forming the titanium-based oxide powder to a suitable shape in advance, calcining the formed product, and then impregnating it into an aqueous solution of the active catalyst component source, and further impregnating the calcined product into a solution of noble metal.

In the catalysts produced in such methods, a noble metal can be mainly present only at the surface of the catalyst, and desirable catalyst components cannot be distributed substantially uniformly into the inside of the catalyst. Therefore, use of such catalysts over a long period cannot maintain desired activity because the active components easily form aggregates.

An object of the present invention is to provide a catalyst which can remove by decomposing an organic acid such as acetic acid in exhaust gas over a long period in high removal efficiency, and a method for producing such a catalyst simply and conveniently.

Another object of the present invention is to provide a method for treating by decomposing and removing an organic acid such as acetic acid in an exhaust gas over a long period in high removal efficiency by using this catalyst.

The above objects can be attained by

a catalyst for treating an organic acid-containing exhaust gas, which comprises a layer of a refractory inorganic oxide selected from alumina or activated alumina supported on a refractory three-dimensional structure body;

at least one catalyst component (A) selected from the group consisting of an oxide of only Ce, an oxide of only W, a complex oxide of W and La, or a complex oxide of W and Ce;

and at least one noble metal component (B) selected from the group consisting of Pt, Pd, Rh, Ru, Ir and Au;

wherein said catalyst component (A) and said noble metal component (B) are substantially uniformly present in the layer of the refractory inorganic oxide,

and the ratio of A to B (A/B) of the catalyst component (A) is 0.7/1 to 1.3/1

and the ratio of A to B (A/B) of the noble metal component (B) is 0.7/1 to 1.3/1,

wherein A is the mass amount of the component (A) or (B) present in a region down to (1/4) T (one fourth of T) (mm) from the layer surface, and B is the mass amount of the component (A) or (B) present in a region from (1/4) T (one fourth of T) (mm) to (1/2) T (a half of T) (mm) from the layer surface, said T being the thickness of the refractory inorganic oxide layer in millimeters.

A catalyst for treating an organic acid-containing exhaust gas of the present invention (in the present invention, it may be referred to simply as "a catalyst of the present invention") has high efficiency of decomposing an organic acid in exhaust gas, and has excellent durability. Accordingly, by using the catalyst of the present invention, it is possible to decompose and remove an organic acid in exhaust gas, in high removal ratio and stably over a long period.

The above and other objects, features and advantages of the present invention will become clear from the following description of the preferred embodiments.

Brief Description of Drawings:

Fig. 1 is an EPMA analysis chart of the catalyst (1).
Fig. 2 is an EPMA analysis chart of the catalyst (4).
Fig. 3 is an EPMA analysis chart of the catalyst (6).
Fig. 4 is an EPMA analysis chart of the catalyst (8).

Best Mode for Carrying Out the Invention:

A first aspect of the present invention is to provide a catalyst for treating an organic acid-containing exhaust gas, which comprises a catalyst for treating an organic acid-containing exhaust gas, which comprises a layer of a refractory inorganic oxide selected from alumina or activated alumina

supported on a refractory three-dimensional structure body; at least one catalyst component (A) (in the present invention, it may be referred to simply as "a catalyst component (A)") selected from the group consisting of an oxide of only Ce, an oxide of only W, a complex oxide of W and La, or a complex oxide of W and Ce, and at least one noble metal component (B) (in the present invention, it may be referred to simply as "a noble metal component (B)") selected from the group consisting of Pt, Pd, Rh, Ru, Ir and Au; wherein said catalyst component (A) and said noble metal component (B) are substantially uniformly present in the layer of the refractory inorganic oxide, and the ratio of A to B (A/B) of the catalyst component (A) is 0.7/1 to 1.3/1 and the ratio of A to B (A/B) of the noble metal component (B) is 0.7/1 to 1.3/1, wherein A is the mass amount of the component (A) or (B) present in a region down to (1/4) T (one fourth of T) (mm) from the layer surface, and B is the mass amount of the component (A) or (B) present in a region from (1/4) T (one fourth of T) (mm) to (1/2) T (a half of T) (mm) from the layer surface, said T being the thickness of the refractory inorganic oxide layer in millimeters. By using the catalyst of the present invention, an organic acid in exhaust gas can be decomposed in high efficiency, and excellent catalytic activity can be maintained over a long period.

In particular, in the catalyst for treating an organic acid-containing exhaust gas of the present invention, a layer of a refractory inorganic oxide is preferably supported (formed) on a refractory three-dimensional structure body, and in this case, the catalyst component (A) and the noble metal component (B) are present substantially uniformly in the layer of the refractory inorganic oxide supported (formed) on the refractory three-dimensional structure body (namely, present substantially uniformly from the surface of the catalyst of the present invention toward inside thereof). Among these components, when a noble metal component (B) is distributed locally in the region near the surface of the catalyst as by a conventional method, thenoblemetal is present at the surface at an unduly high concentration, which induces aggregation of noble metal during use thereof and thus induces decrease in catalytic activity. On the contrary, by adopting such an embodiment, the catalyst components (A) and (B), which contribute to reaction, are substantially uniformly present not only at the surface of the catalyst but also inside thereof . Since the noble metal component (B) is not present on the surface of the catalyst at a high concentration, aggregation of the noble metal component (B) is not occurred on the surface of the catalyst during the use thereof. Accordingly, the decrease in catalytic activity can be substantially repressed and prevented. Further, the catalyst component (A), which acts as a promoting catalyst, is present substantially uniformly from the surface of the catalyst toward inside thereof together with the noble metal component (B). Accordingly, the catalyst component (A) as promoting catalyst can efficiently promote the improvement of activity and durability of the noble metal component (B). Accordingly, the decrease in catalytic activity by aggregation of noble metal can be repressed even after use of the catalyst over a long period, and the catalyst of the present invention can exert excellent catalyst activity over a long period. Therefore, by using the catalyst of the present invention, it is possible to decompose an organic acid in an exhaust gas in higher efficiency, and more excellent catalytic activity can be maintained over a long period.

The embodiment of the present invention will be described in detail below.


1. Catalyst component (A)

The catalyst component (A) is an oxide of only Ce, an oxide of only W, a complex oxide of W and La, or a complex oxide of W and Ce. The above catalyst component (A) may be used alone or may be used in a mixture form of two or more members. In the present invention, by the addition of the catalyst component (A), removal ratio of the organic acid and durability can be improved.

In the present invention, the content of the catalyst component (A) is not especially limited, and can be selected as appropriate in consideration of desired effects (for example, activity of treating an organic acid) . In the present invention, the catalyst component (A) is preferably used in the combination of a refractory inorganic oxide which will be described later. In this case, the catalyst component (A) may be either in a mixed form with a refractory inorganic oxide or in a state of being supported on a refractory inorganic oxide. An amount of the catalyst component (A) (an amount reduced to as a metal oxide) is not especially limited, and in general, is preferably in the range of 0.5 to 50 parts by weight, more preferably in the range of 0.5 to 40 parts by weight, and further more preferably in the range of 1 to 40 parts by weight, based on 100 parts by weight of the total amount of the catalyst components (the total weight of the catalyst component (A), the noble metal component (B), and the refractory inorganic oxide) . The amount of the catalyst component (A) below the lower limit would reduce interaction between the catalyst component (A) and the noble metal component (B), and may result in that high removal ratio of the organic acid and durability cannot be obtained. In addition, the resultant catalyst would have reduced heat-resistance. On the other hand, the amount of the catalyst component (A) over the upper limit would reduce dispersion of the noble metal component (B) caused by reduced specific surface area of the catalyst, resulting in that high removal ratio of the organic acid and durability cannot be obtained. In addition, the resultant catalyst would have reduced oxidation activity of the catalyst.


2. Noble metal component (B)

The noble metal component (B) is at least one member selected from the group consisting of platinum (Pt), palladium (Pd), rhodium (Rh), ruthenium (Ru), iridium (Ir) and gold (Au). The above noble metal component (B) may be used alone or may be used in a mixture form of two or more members . In the present invention, by the addition of the noble metal component (B), oxidation activity, removal ratio of the organic acid and durability of the catalyst are improved. Among these, the noble metal component (B) preferably contains at least one member of Pt, Pd, Rh; more preferably at least one of Pt and Pd; and particularly preferably only Pt, or a combination of Pt and Pd.

In the present invention, the content of the noble metal component (B) is not especially limited, and can be selected as appropriate in consideration of desired effects (for example, activity of treating an organic acid) . In the present invention, the noble metal component (B) is preferably used in the combination of a refractory inorganic oxide which will be described later. In this case, the noble metal component (B) may be either in a mixed form with a refractory inorganic oxide or in a state of being supported on a refractory inorganic oxide, and is preferably used in a state of being supported on a refractory inorganic oxide. An amount of the noble metal component (B) (an amount reduced to as a noble metal itself) is not especially limited, and in general, is preferably in the range of 0.01 to 5 parts by weight, more preferably from in the range of 0.02 to 3 parts by weight, and further more preferably in the range of 0.1 to 3 parts by weight, based on 100 parts by weight of the total amount of the catalyst components (the total weight of the catalyst component (A), the noble metal component (B), and the refractory inorganic oxide). Use of the noble metal component (B) within such a range is capable of attaining sufficient decomposition and removal performance of the organic acid, and durability. The amount of the noble metal component (B) below the lower limit would provide insufficient oxidation activity of the noble metal component (B), resulting in that high removal ratio of the organic acid or durability cannot be obtained. On the other hand, the supporting amount of the noble metal component (B) over the upper limit would not provide improvement of oxidation activity of the catalyst comparable to the addition, and could increase cost of a raw material oppositely.

In addition, in the present invention, the presence ratio (mass ratio) of the catalyst component (A) and the noble metal component (B) is not especially limited, and can be selected as appropriate in consideration of desired effects (for example, activity of treating an organic acid). Preferably, the presence ratio of the catalyst component (A) and the noble metal component (B) (mass ratio of the catalyst component (A) reduced to as a metal oxide: mass of noble metal component (B) reduced to as a noble metal itself) is in the range of 0.1 to 500 : 1, more preferably, in the range of 0.4 to 400 : 1. In the case where the catalyst component (A) and the noble metal component (B) are present in such a ratio, a catalyst of the present invention would be capable of exerting significantly excellent decomposition and removal performance of the organic acid, and durability.

3. Refractory inorganic oxide

The catalyst for treating an exhaust gas containing an organic acid of the present invention essentially contains the catalyst component (A) and the noble metal component (B), , and in addition to the above two components, it contains a layer of a refractory inorganic oxide selected from alumina ($Al_2O_3$), or activated alumina. These refractory inorganic oxides may be used alone or may be used in a mixture form of two members.

The amount of the refractory inorganic oxide is not especially limited, as long as it does not inhibit action of the catalyst component (A) and the noble metal component (B). However, the amount of the refractory inorganic oxide is preferably in the range of 45 to 99.49 parts by weight, more preferably in the range of 47 to 99.49 parts by weight, and further more preferably in the range of 47.5 to 99.4 parts by weight, based on 100 parts by weight of the total amount of the catalyst components (the total weight of the catalyst component (A), the noble metal component (B), and the refractory inorganic oxide).

The refractory inorganic oxide is not especially limited on a shape or specific surface area thereof . It is preferable to have desired catalyst component (A) and noble metal component (B) highly dispersed in the refractory inorganic oxide (in some cases, supported on the refractory inorganic oxide in a highly dispersed state) . The refractory inorganic oxide may take a shape, for example, particle, fine particle, powder, cylinder, circular cone, rectangular column, cube, pyramid, infinite form or the like. The refractory inorganic oxide may preferably take a shape of particle, fine particle or powder form. Average particle diameter, in the case where the refractory inorganic oxide may take a shape of particle, fine particle or powder form, is not especially limited. It is preferably, for example, in a range of 0.1 to 100 $\mu$m, and more preferably in the range of 1 to 50 $\mu$m. Adoption of such a range can attain easy high-dispersion of sufficient amount of the catalyst component (A) and the noble metal component (B) in the refractory inorganic oxide or easy support of sufficient amount of the catalyst component (A) and the noble metal component (B) on the refractory inorganic oxide in a highly dispersed state. It should be noted that "average particle diameter" of the refractory inorganic oxide in the present invention can be measured by average value of particle diameters of the refractory inorganic oxide measured by a known method such as classification.

In addition, a BET specific surface area of the refractory inorganic oxide may be any value as long as sufficient to support the catalyst component (A) and the noble metal component (B) thereon in a highly dispersed state. The BET specific surface area of the refractory inorganic oxide is preferably in the range of 50 to 400 $m^2/g$, and more preferably in the range of 100 to 300 $m^2/g$. The specific surface area of such a range can attain support of sufficient amount of the catalyst component (A) and the noble metal component (B) on the refractory inorganic oxide.

A catalyst of the present invention can be used in a form where this kind of catalyst for treating an exhaust gas is generally used. Specifically it may be used by subjecting a solid substrate of such as cordierite, alumina, zeolite or the like to wash coating (coating with the slurry). Therefore, a catalyst of the present invention is used as a catalyst layer containing the above catalyst components, formed on the solid substrate. Namely, a refractory three-dimensional structure body is not especially limited, and a material similar to a known one may be used. For example, a cylinder-like structure body having a plurality of through holes penetrating in an axis direction, such as honeycomb, metal honeycomb, plug honeycomb, metal mesh, and corrugated shape or the like may be used suitably. Among these, honeycomb is particularly preferable. A material of the refractory three-dimensional structure body is not especially limited, and ceramic such as cordierite, mullite or the like; a metal material such as Fe-Cr-Al alloy, stainless steel or the like; a metal oxide such as alumina, silica, zirconia, titania or the like; and a complex oxide thereof; zeolite, silica or the like may be included. Among theses, cordierite, or stainless steel aer preferable, and cordierite is particularly preferable.

A shape of the refractory three-dimensional structure body is not especially limited, as long as capable of forming a layer of the refractory inorganic oxide. For example, in the case where the refractory three-dimensional structure body is honeycomb, pore number per unit area (aperture ratio) is preferably in the range of 20 to 200 pieces/square with a side length of 15 cm, more preferably in the range of 30 to 150 pieces/ square with a side length of 15 cm; mesh opening (pitch) is preferably in the range of 0.5 to 7.0 mm, more preferably in the range of 1.0 to 5.0 mm; and wall thickness is preferably in the range of 0.1 to 1.5 mm, more preferably in the range of 0.1 to 1.0 mm. By adopting such a structure, the layer of the refractory inorganic oxide can be formed efficiently so as to have desired coat thickness.

As for the catalyst for treating an exhaust gas containing an organic acid of the present invention, the catalyst component (A) and the noble metal component (B) are present substantially uniformly in the catalyst solid or in the catalyst layer from the surface toward the inside thereof. In addition, the catalyst of the present invention has such a structure that the layer of a refractory inorganic oxide is supported (formed) on the refractory three-dimensional structure body. Accordingly, as for the catalyst of the present invention, the layer of the refractory inorganic oxide is supported (formed) on the refractory three-dimensional structure body, and the catalyst component (A) and the noble metal component (B) are present substantially uniformly in the layer of the refractory inorganic oxide, which is supported (formed) on the refractory three-dimensional structure body. By adopting such a structure, the catalyst component (A) and the noble metal component (B) are distributed not only at the surface of the catalyst but also inside thereof substantially uniformly. In the catalyst of the present invention, the aggregation of noble metal component (B) can be substantially repressed or prevented, and at the same time, the catalyst component (A) can sufficiently serve as a promoting catalyst. Accordingly, the catalyst of the present invention can maintain treatment (removal) performance of the organic acid over a long period. Therefore, by using the catalyst of the present invention, it is possible to decompose an organic acid in exhaust gas, in significantly high efficiency, and also excellent catalytic activity can be maintained over a long period. In addition, also in the case where a catalyst of the present invention contains the above refractory inorganic oxide, the refractory inorganic oxide may also be preferably present substantially uniformly in the catalyst solid or the catalyst layer (in particular, the layer of the refractory inorganic oxide) (i.e., present substantially uniformly from the surface of the catalyst toward the inside thereof).

In the present invention, the fact that the catalyst component (A) and the noble metal component (B) are present substantially uniformly in the catalyst solid or the catalyst layer (in particular, in the layer of refractory inorganic oxide), or present substantially uniformly from the surface of the catalyst toward the inside thereof, can be measured by X-ray analysis or the like, and confirmed by analyzing presence of these elements. Specifically, in the present specification, the fact that the catalyst component (A) and the noble metal component (B) are present substantially uniformly in the catalyst solid or the catalyst layer (in particular, in the layer of refractory inorganic oxide), or present substantially uniformly from the surface of the catalyst toward the inside thereof, can be confirmed by the following electron probe micro analyzer (EPMA) analysis:

<EPMA analysis>

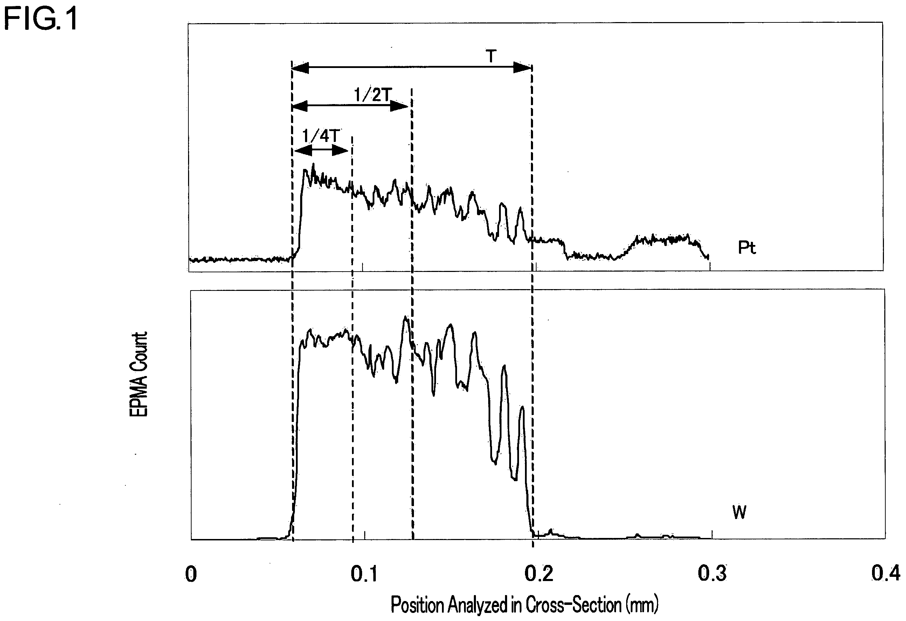

Analysis apparatus: EPMA-1610 manufactured by Shimadzu Corp.
Diameter of X-ray beams: 1 $\mu$m
Acceleration voltage: 25 kV
Sample current: 0.1 $\mu$A
Measurement interval: 0.5 $\mu$m
Measurement time: 0.7 sec/point
For example, Fig. 1 is an EPMA analysis chart of the catalyst layer composed of alumina, tungsten oxide and platinum, obtained in the following Example 1, and in the catalyst layer of Example 1, it is noted that tungsten and platinum are present substantially uniformly from the surface toward the inside.
In the present specification, "the catalyst component (A) and the noble metal component (B) are present substantially uniformly in the catalyst solid or the catalyst layer (in particular, in the layer of refractory inorganic oxide)", or "the catalyst component (A) and the noble metal component (B) are present substantially uniformly from the surface of the catalyst toward the inside thereof" means that, provided that thickness of the layer of the refractory inorganic oxide being T (mm), amount of the catalyst component (A) or the noble metal component (B) present in a region down to (1/4) T (one-fourth of T) (mm) from the catalyst layer surface being A (g), and amount of the catalyst component (A) or the noble metal component (B) present in a region from (1/4) T (one-fourth of T) (mm) to (1/2) T (half of T) (mm) from the catalyst layer surface being B (g), ratio of A to B (namely, A/B) is about around 1, preferably in a range of from 0.7/1 to 1.3/1. For example, in the catalyst layer of Example 1, provided that total thickness of the catalyst layer being T, amount of tungsten or platinum present in a region down to (1/4) T from the catalyst layer surface being A, and amount of tungsten or platinum present in a region between (1/4) T to (1/2) T from the catalyst surface being B, ratio of A to B is within a range of A/B= 0.7/1 to 1.3/1 (for tungsten, A/B= 1.28/1, and for platinum, A/B= 1.26/1), and as for both of tungsten as the catalyst component (A) and platinum as the noble metal component (B), the catalyst component (A) and the noble metal component (B) are present substantially uniformly in the catalyst solid or the catalyst layer (in particular, in the layer of refractory inorganic oxide).
The catalyst for treating an exhaust gas containing an organic acid of the present invention contains the above catalyst component (A) and the noble metal component (B), along with refractory inorganic oxide, if necessary. In this case, a form of a catalyst of the present invention is not especially limited, and a form similar to known one may be used. Specifically, the catalyst of the present invention has average pore diameter in the range of 0.01 to 0.10 $\mu$m, preferably in the range of 0.01 to 0.07 $\mu$m; total pore volume in the range of 0.02 to 0.50 mL/g, preferably in the range of 0.05 to 0.40 mL/g; and specific surface area in the range of 5 to 500 $m^2$/g, preferably in the range of 10 to 400 $m^2$/g. A catalyst having such characteristics can exert excellent oxidative decomposition performance of the organic acid. It should be noted that average pore diameter means average diameter calculated from pore distribution measured by a mercury penetration method; and total pore volume means total volume of pores measured by a mercury penetration method, including a carrier.

A method for producing a catalyst for treating an exhaust gas containing an organic acid is not especially limited, and a known production method may be applied similarly, or by modification as appropriate, or by combination of such a method as appropriate. A method for producing the catalyst for treating an organic acid-containing exhaust gas which comprises:

mixing a refractory inorganic oxide with a catalyst component (A) to obtain a slurry, wherein the catalyst component (A) is selected from the group consisting of an oxide of only Ce, an oxide of only W, a complex oxide of W and La, or a complex oxide of W and Ce;

coating a refractory three-dimensional structure body with the resulting slurry to form a refractory inorganic oxide layer on the refractory three-dimensional structure body; and

supporting a noble metal component (B) selected from the group consisting of Pt, Pd, Rh, Ru, Ir and Au on the refractory inorganic oxide in said layer by impregnating the refractory three-dimensional structure body having the refractory inorganic oxide layer formed thereon with an aqueous solution of an amine complex of hydroxide or a noble metal, the pH of which has been adjusted to 7 to 14, and then calcining the impregnated structure.

Such a method is preferable that the catalyst component (A) and the noble metal component (B) relevant to the present invention are made present substantially uniformly in the catalyst solid or the catalyst layer, from the surface toward the inside thereof.

Explanation will be given below on a preferable production method for a catalyst of the present invention, which makes the catalyst component (A) and the noble metal component (B) present substantially uniformly in the catalyst solid or the catalyst layer, from the surface toward the inside thereof. However, the present invention should not be limited to the following method.

(Method A)

A refractory inorganic oxide (for example, an alumina powder) and a precursor of the catalyst component (A) (for example, a tungsten oxide powder) are mixed, preferably as uniformly as possible, with an auxiliary agent generally used in formation of a solid, and the resulting mixture is molded in a pellet shape including spherical or column shape, and drying, if necessary, and subsequently calcining in air at a temperature in the range of 200 to 800$\underline{o}$C for 1 to 10 hours, to form a solid composed of alumina and tungsten oxide. In this solid, the fact that alumina and tungsten oxide are present substantially uniformly can be confirmed by EPMA analysis.

Then, the above solid is impregnated with a solution of a noble metal-containing compound, as a source of the noble metal component (B), usually, an aqueous solution of the noble metal-containing compound, followed by drying in air flow at 80 to 200$\underline{o}$C for 1 to 10 hours, and then calcining at a temperature in the range of 200 to 800$\underline{o}$C for 1 to 10 hours, to obtain a catalyst (a catalyst solid) of the present invention. In this case, the solid is preferably impregnated with a solution of a noble metal-containing compound at 0 to 60$\underline{o}$C for 10 to 120 minutes. Such conditions can attain uniform distribution of the noble metal component (B) in a layer of the refractory inorganic oxide. For the purpose of making the noble metal component (B) uniformly present in (supported on) a catalyst layer (a layer of a refractory inorganic oxide), , it is important to adjust pH of the solution of a noble metal-containing compound in a specific pH range. The pH of the solution of a noble metal-containing compound may be adjusted preferably to a range of 4 to 14, more preferably to a range of 7 to 14. For example, the pH of an aqueous dinitrodiammine platinum solution without being adjusted is about 1.0. In such strongly acidic conditions, thenoblemetal component (B) can not be penetrated uniformly into the inside of the catalyst layer (layer of a refractory inorganic oxide) and possibly present locally in a region near the surface of the catalyst, even when the pH is not adjusted. Accordingly, the pH of the solution of a noble metal-containing compound may be particularly preferably adjusted so as to become basic . By adjusting a pH of a solution of a noble metal-containing compound so as to become basic and then impregnating the solid with the solution of a noble metal-containing compound, the noble metal component (B) can be supported uniformly into the inside of the catalyst layer (a layer of a refractory inorganic oxide).

As a specific example of the above noble metal-containing compound, for example, an amine complex, or a hydroxide of a noble metal (at least one member selected from the group consisting of Pt, Pd, Rh, Ru, Ir and Au) is included. Among these, a basic solution of an amine complex, or a hydroxide of the noble metal is suitably used. Inaddition, the solution of the noble metal-containing compound can be obtained in a solution or slurry form, by dissolving, dispersing or suspending the above noble metal-containing compound in a suitable solvent. The suitable solvent is not especially limited, as long as capable of dissolving, dispersing or suspending the above noble metal-containing compound. Preferably, water can be used. A concentration of the noble metal-containing compound in the solution is not especially limited, and may be selected as appropriate depending on desired amount added to (in some cases, supported on) the refractory inorganic oxide.

In the catalyst solid obtained as above, the noble metal is present substantially uniformly from the surface toward the inside thereof. This fact can be confirmed by EPMA analysis similarly as in the above tungsten.

As a raw material for supplying W, La and Ce, any of an inorganic compound and an organic compound may be used, as long as being one generating an oxide by calcining at a temperature of the above range, in addition to each oxide thereof. Specifically, for example, a hydroxide, an ammonium salt, an oxalate, an acetate salt, a halide, a sulfate, a nitrate, containing W, La or Ce can be used. Among these, an oxide of each catalyst component (A) is preferable, and tungsten oxide ($WO_3$) is particularly preferable.

An amount of a raw material for supplying the catalyst component (A) is not especially limited, and selected as appropriate depending on desired amount added to (in some cases, supported on) the refractory inorganic oxide. Specifically, the amount of tungsten oxide ($WO_3$) is in the range of 0.5 to 50 parts by weight, preferably in the range of 0.5 to 40 parts by weight, and more preferably in the range of 1 to 40 parts by weight, based on 100 parts by weight of the refractory inorganic oxide (for example, alumina ($Al_2O_3$)). The amount of the tungsten oxide less than 0.5 part by weight would reduce interaction between tungsten and the noble metal, and the noble metal would become no longer present substantially uniformly from the surface of the solid toward the inside thereof, resulting in that high removal ratio of the organic acid and durability cannot be obtained. On the other hand, the amount over 50 parts by weight would reduce dispersion nature of the noble metal caused by reduced specific surface area, resulting in that high removal ratio of the organic acid and durability cannot be obtained.

An amount of lanthanum oxide ($La_2O_3$), and cerium oxide ($CeO_2$) is each in the range of 0.5 to 50 parts by weight, preferably in the range of 0.5 to 40 parts by weight, and more preferably in the range of 1 to 40 parts by weight, based on 100 parts by weight of the refractory inorganic oxide (for example, alumina ($Al_2O_3$)). The amount less than 0.5 parts by weight would reduce heat resistance of the catalyst, while the amount over 50 parts by weight would reduce oxidation activity of the catalyst.

An amount of a raw material for supplying the noble metal component (B) (a noble metal-containing compound) is not especially limited, and selected as appropriate depending on desired amount added to (in some cases, supported on) the refractory inorganic oxide. Specifically, the amount of noble metal-containing compound is in the range of 0.01 to 5 parts by weight, preferably in the range of 0.02 to 3 parts by weight, and more preferably in the range of 0.1 to 3 parts by weight, based on 100 parts by weight of the refractory inorganic oxide (for example, alumina). The amount of the noble metal-containing compound less than 0.01 part by weight would reduce oxidation activity of the catalyst, while even when the amount is over 5 parts by weight, comparable improvement of catalytic activity cannot be expected, and thus raw material cost increases oppositely.

(Method B)

A solution or a suspension of the refractory inorganic oxide (for example, an alumina powder) and a precursor of the catalyst component (A) (for example, a tungsten compound), usually, an aqueous solution of the precursor of the catalyst component (A) is mixed in a slurry state, as uniformly as possible, and subjected to drying, if necessary, and subsequently calcining in air at a temperature in the range of 200 to 800ºC for 1 to 10 hours. In this way, the precursor of the catalyst component (A) is converted to a desired metal or a metal oxide (for example, a tungsten compound is converted to tungsten oxide), and is made to present substantially uniformly in the refractory inorganic oxide. The resulting powder in this way is molded to a desired shape to obtain a solid composed of the refractory inorganic oxide and the catalyst component (A) (for example, alumina and tungsten oxide).

Subsequently, a catalyst solid is obtained similarly as in the method A. It should be noted that amount of the noble metal or the like is the same as in the method A.

As the above tungsten compound, any of an inorganic compound and an organic compound may be used, as long as being one generating a tungsten oxide by calcining at a temperature of the above range. Specifically, for example, a hydroxide, an ammonium salt, an oxalate salt, a halide, a sulfate salt, a nitrate salt, containing tungsten or the like can be used.

(Method C)

A solution or a suspension of the refractory inorganic oxide (for example, an alumina powder) and a precursor of the catalyst component (A) (for example, a tungsten compound), usually, an aqueous solution of the tungsten compound is mixed in a slurry state, as uniformly as possible, and the resulting slurry is adhered onto a refractory three-dimensional structure body (a solid substrate) such as cordierite, by a generally used method such as impregnation method, immersion method or the like, drying in air at 80 to 200ºC for 1 to 10 hours, and subsequently calcining at 200 to 800ºC for 1 to 10 hours, to provide a layer (a layer of the refractory inorganic oxide) composed of the refractory inorganic oxide and the catalyst component (A) (for example, alumina and tungsten oxide) onto the solid substrate, where the catalyst component (A) (for example, tungsten oxide) is present substantially uniformly in the refractory inorganic oxide. In this case, a thickness of a layer (a layer of the refractory inorganic oxide) composed of the refractory inorganic oxide and the catalyst component (A) is not especially limited, and may be set corresponding to the kind of the catalyst component (A) or concentration thereof in the slurry or the like, preferably so as to be the amount of the catalyst component (A) as described above. Specifically, the thickness of a layer (a layer of the refractory inorganic oxide) composed of the refractory inorganic oxide and the catalyst component (A) is preferably in the range of 10 to 600 $\mu$m, and more preferably in the range of 50 to 400 $\mu$m.

Subsequently, by subjecting to the same impregnation or immersion processing or the like, as described in the method A, a catalyst layer (a layer of the refractory inorganic oxide), , where the noble metal component (B) is present substantially uniformly, in a layer composed of the refractory inorganic oxide and the catalyst component (A). It should be noted that amount of the noble metal or the like is the same as in the method A.

Among the above methods from A to C, the above method C is particularly preferable in consideration of simple and convenient step, uniformity of the catalyst component (A) and the noble metal component (B) in the layer of the refractory inorganic oxide, loss of pressure, or the like. Accordingly, a second aspect of the present invention is to provide a method for producing the catalyst of the present invention which comprises mixing a refractory inorganic oxide with a catalyst component (A) to obtain a slurry; coating a refractory three-dimensional structure body with the resulting slurry to form a refractory inorganic oxide layer on the refractory three-dimensional structure body; and supporting a noble metal component (B) on the refractory inorganic oxide in said layer.

The catalyst of the present invention is capable of decomposing an organic acid in exhaust gas in high efficiency, and maintaining excellent catalytic activity over a long period. In particular, in the catalyst of the present invention, in the case where the catalyst component (A) and the noble metal component (B) are present substantially uniformly in the layer of refractory inorganic oxide (namely, present substantially uniformly from the surface of the catalyst of the present invention toward inside thereof) which is added to (in some cases, supported on) the refractory three-dimensional structure body, or in the case where a catalyst is produced by a method of the present invention, the catalyst components (A) and (B), which contribute to a reaction, can be present not only at the surface of the catalyst but also inside thereof substantially uniformly. Therefore, aggregation of noble metal during use thereof by use of the catalyst over a long period can be repressed, and thus the catalyst can exert decomposition activity of the organic acid. Therefore, by using the catalyst of the present invention, an organic acid in exhaust gas can be decomposed in higher efficiency, and in addition, excellent catalytic activity can be maintained over a long period. Accordingly, the catalyst the present invention, or the catalyst produced by a method of the present invention, is capable of efficiently removing the organic acid in exhaust gas. Accordingly, a third aspect of the present invention is to provide a method for treating an organic acid-containing exhaust gas which comprises contacting an organic acid-containing exhaust gas with the catalyst of the present invention or the catalyst produced by the method of the present invention, to decompose the organic acid contained in the exhaust gas.

The organic acid contained in exhaust gas is decomposed and removed by subjecting exhaust gas containing the organic acid to contacting with a catalyst of the present invention. The conditions in carrying out this treatment are not especially limited, and the treatment can be carried out by selecting optimal conditions as appropriate. For example, space velocity of exhaust gas is usually from 100 to 100000 hr$^{-1}$ (STP), and preferably from 200 to 50000 hr$^{-1}$ (STP) . In addition, the temperature of contacting an exhaust gas with the catalyst for treating an organic acid-containing exhaust gas is in the range of 250 to 700ºC, and preferably in the range of 250 to 600ºC.

The exhaust gas containing the organic acid, to be treated by using a catalyst of the present invention, is exhaust gas containing the organic acid, which is exhausted from a plant producing chemicals, or a process such as printing, painting or the like. As this organic acid, formic acid, acetic acid, acrylic acid, propionic acid, butyric acid, valeric acid, tartaric acid, phthalic acid, maleic acid or the like is included, however, among these, a catalyst of the present invention is suitably used for decomposing and removing a carboxylic acid having carbon atoms of from 1 to 6, in particular, acetic acid. An amount of the organic acid in exhaust gas is not especially limited, however, a catalyst of the present invention is suitably used for treating an exhaust gas containing the organic acid in exhaust gas, in an amount of from 0.1 to 20000 ppm, preferably from 0.1 to 15000 ppm, and more preferably from 1 to 10000 ppm.

Examples

Explanation will be given below further specifically on the present invention with reference to the following Examples, which show advantageous embodiments of the present invention. Analysis of a catalyst composition was carried out under the following conditions by fluorescent X-ray analysis.

(Composition analysis)

Analysis apparatus: RIX2000 manufactured by Rigaku Corp.
Atmosphere in analysis: in vacuum
Spin rate of a sample: 60 rpm
X-ray source: Rh bulb

Example 1

(Process 1)

Into a porcelain ball mill, 393 g of a $\gamma$-$Al_2O_3$ powder (average particle diameter: 5 nm), 231 g of an ammonium meta-tungstate aqueous solution (a solution containing 50% by weight as $WO_3$), and 409 g of an aqueous nitric acid solution were charged, mixed and crushed, to obtain a slurry. The resultant slurry was adhered onto a cordierite honeycomb (1.0L, aperture ratio: 200 cells/in$^2$, mesh opening: 1.8 mm, wall thickness: 0.5mm), removing excess slurry in the cell by air flow, drying at 100ºC, and calcining under air atmosphere at 500ºC for 3 hours, to obtain an (Al-W) coated honeycomb. Coat amount was 100 g/L ($Al_2O_3$=77 g/L, $WO_3$=23 g/L). In addition, coat thickness was 100 $\mu$m.

(Process 2)

The above (Al-W) coated honeycomb was impregnated with an aqueous solution of hexaammine platinum (pH 12. 0) at room temperature for 30 minutes, removing excess slurry in the cell by air flow, and then drying at 100ºC, and calcining under air atmosphere at 500ºC for 3 hours , to obtain a catalyst (1) (Pt/Al-W) . Analysis of the composition of the resulting catalyst (1) showed content of Pt being 2.0 g/L. On this catalyst, distribution of the components was measured by EPMA analysis, to find that both of Pt and W were present substantially uniformly throughout the catalyst layer (from the surface of the catalyst toward inside thereof) . The EPMA analysis chart is shown in Fig. 1.

Example 2

(Process 1)

An (Al-W) coated honeycomb was obtained similarly as in the process 1 of the Example 1.

(Process 2)

A catalyst (2) (Pt-Pd/Al-W) was obtained similarly as in the process 2 of the Example 1, except that a mixed solution of an aqueous hexaammine platinum solution and an aqueous tetraammine palladium solution (pH 12.0) was used instead of the aqueous solution of hexaammine platinum, in the process 2 of the Example 1. Analysis of the composition of the resulting catalyst (2) showed contents of Pt and Pd were 2.0 g/L and 1.0g/L, respectively. On this catalyst, distribution of the components was measured by EPMA analysis, to find that Pt, Pd and W were all present substantially uniformly throughout the catalyst layer.

Example 3

(Process 1)

Into a porcelain ball mill, 364 g of a $\gamma$-$Al_2O_3$ powder (average particle diameter: 5 nm), 214 g of aqueous solution of ammonium meta-tungstate (a solution containing 50% by weight as $WO_3$), 36 g of a lanthanum oxide powder, and 409 g of an aqueous nitric acid solution were charged, mixed and crushed, to obtain a slurry. The resultant slurry was adhered onto a cordierite honeycomb(1.0 L, aperture ratio: 200 cells/in$^2$, mesh opening: 1.8 mm, wall thickness: 0.5 mm), removing excess slurry in the cell by air flow, drying at 100ºC, and calcining under air atmosphere at 500ºC for 3 hours, to obtain an (Al-W-La) coated honeycomb. Coat amount was 100 g/L ($Al_2O_3$=71 g/L, $WO_3$=22 g/L, $La_2O_3$=7 g/L) . In addition, coat thickness was 200 $\mu$m.

(Process 2)

A catalyst (3) (Pt-Pd/Al-W-La) was obtained similarly as in the process 2 of the Example 2, except that the above (Al-W-La) coated honeycomb was used instead of the (Al-W) coated honeycomb, in the process 2 of the Example 2. Analysis of the composition of the resulting catalyst (3) showed contents of Pt and Pd were 2.0 g/L and 1.0 g/L, respectively. On this catalyst, distribution of the components was measured by EPMA analysis, to find that Pt, Pd, W and La were all present substantially uniformly throughout the catalyst layer.

Example 4

(Process 1)

An (Al-W-Ce) coated honeycomb was obtained similarly as in the process 1 of the Example 3, except that a cerium oxide powder was used instead of the lanthanum oxide powder, in the process 1 of the Example 3.

(Process 2)

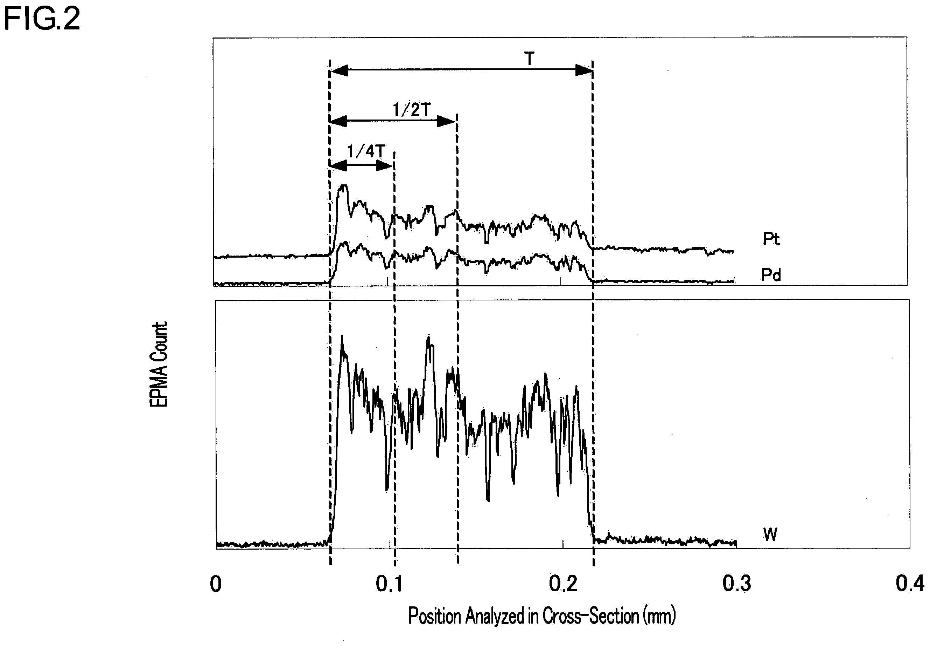

A catalyst (4) (Pt-Pd/Al-W-Ce) was obtained similarly as in the process 2 of the Example 2, except that the above (Al-W-Ce) coated honeycomb was used instead of the (Al-W) coated honeycomb, in the process 2 of the Example 2. Analysis of the composition of the resulting catalyst (4) showed contents of Pt and Pd were 2 .0 g/L and 1.0 g/L, respectively. On this catalyst, distribution of the components was measured by EPMA analysis, to find that Pt, Pd, W and Ce were all present substantially uniformly throughout the catalyst layer. The EPMA analysis chart is shown in Fig. 2.

Example 5

(Process 1)

An (Al-Ce) coated honeycomb was obtained similarly as in the process 1 of the Example 4, except that the aqueous solution of ammonium meta-tungstate was not added, in the process 1 of the Example 4.

(Process 2)

A catalyst (5) (Pt-Pd/Al-Ce) was obtained similarly as in the process 2 of the Example 4, except that the above (Al-Ce) coated honeycomb was used instead of the (Al-W-Ce) coated honeycomb, in the process 2 of the Example 4. Analysis of the composition of the resulting catalyst (5) showed contents of Pt and Pd were 2. 0 g/L and 1.0 g/L, respectively. On this catalyst, distribution of the components was measured by EPMA analysis, to find that Pt, Pd and Ce were all present substantially uniformly throughout the catalyst layer.

Example 6 - Referential Example

(Process 1)

An (Al-W) coated honeycomb was obtained similarly as in the process 1 of the Example 1.

(Process 2)

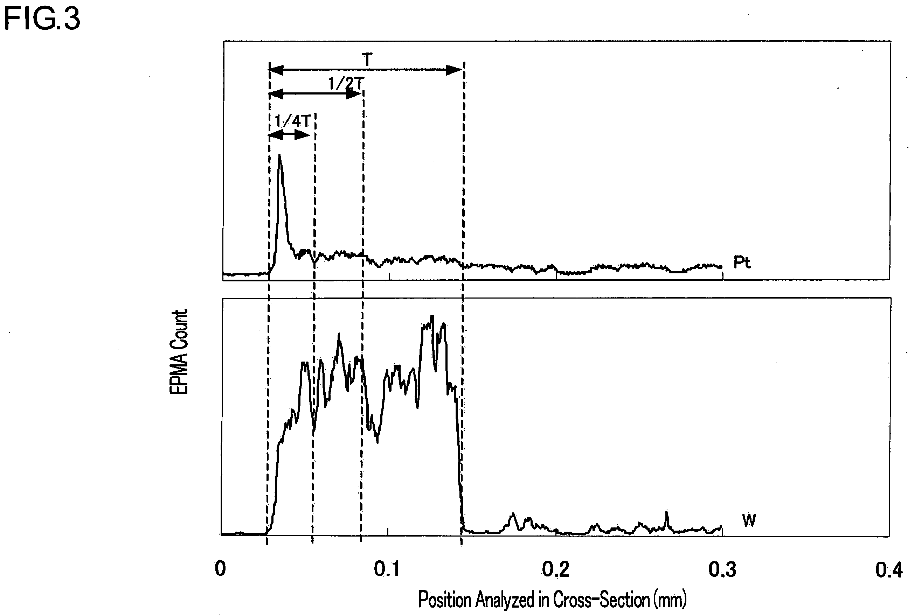

A catalyst (6) (Pt/Al-W) was obtained similarly as in the process 2 of the Example 1, except that an aqueous dinitrodiammine platinum solution (pH 1.0) was used instead of the aqueous solution of hexaammine platinum, and the (Al-W) coated honeycomb was impregnated with the aqueous solution of dinitrodiammine platinum at 90ºC for 30 minutes, in the process 2 of the Example 1. On the resulting catalyst (6), distribution of the components was measured by EPMA analysis, to find that while W was present substantially uniformly throughout the catalyst layer, Pt was present locally in a region near the surface of the catalyst layer. The EPMA analysis chart is shown in Fig. 3.

Example 7 - Referential Example

(Process 1)

An (Al) coated honeycomb was obtained similarly as in the process 1 of the Example 1, except that the ammonium meta-tungstate aqueous solution was not added, in the process 1 of the Example 1.
Then, The (Al) coated honeycomb was impregnated with an ammonium meta-tungstate aqueous solution at room temperature for 10 minutes, removing excess slurry in the cell by air flow, and then drying at 100ºC, and calcining under air atmosphere at 500ºC for 3 hours, to obtain a (W/Al) coatedhoneycomb. Coat amount was 100 g/L ($Al_2O_3$=80

g/L, WO$_3$=20 g/L). In addition, coat thickness was 100 μm.

(Process 2)

A catalyst (7) (Pt/W/Al) was obtained similarly as in the process 2 of the Example 1, except that the above (Pt/W/Al) coated honeycomb was used instead of the (Al-W) coated honeycomb, in the process 2 of the Example 1. On the resulting catalyst, distribution of the components was measured by EPMA analysis, to find that while Pt was present substantially uniformly throughout the catalyst layer, W was present locally in a region near the surface of the catalyst layer.

Comparative Example 1

(Process 1)

An (Al) coated honeycomb was obtained similarly as in the process 1 of the Example 1, except that the ammonium meta-tungstate aqueous solution was not added, in the process 1 of the Example 1.

(Process 2)

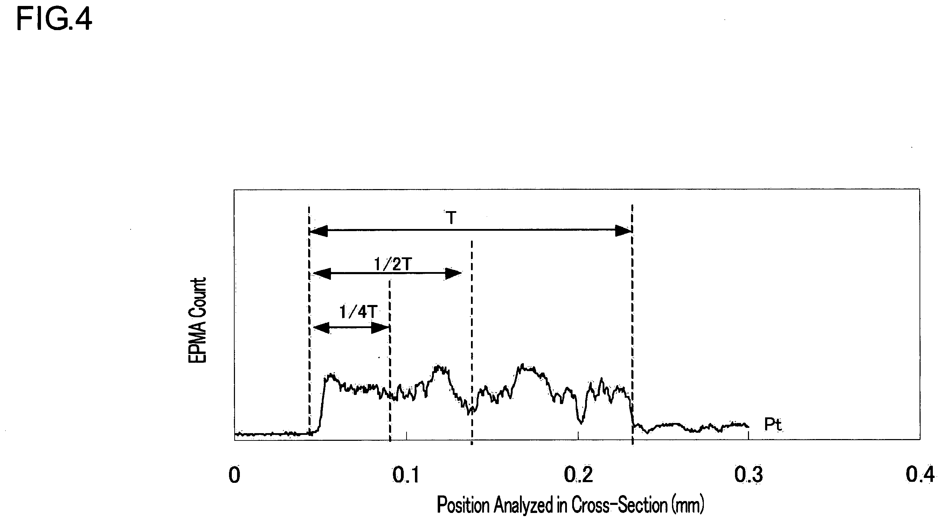

A catalyst (8) (Pt/Al) was obtained similarly as in the process 2 of the Example 1. Analysis of the composition of the resulting catalyst (8) showed content of Pt was 2.0 g/L. On this catalyst, distribution of the components was measured by EPMA analysis, and found that Pt was present uniformly throughout the catalyst layer. The EPMA analysis chart is shown in Fig. 4.

Example 8

The following acetic acid removal test was carried out on the catalysts (1) to (8) obtained in Examples 1 to 7 and Comparative Example 1.

(Acetic acid removal test)

Through a reactor filled with the catalyst, exhaust gas composed of 4000 vol.ppm of acetic acid, 20% of oxygen and the balance of nitrogen was flew under conditions of a gas temperature at the entrance of the reactor of 300°C, and a space velocity (STP) of 30000 hr$^{-1}$, to carry out the acetic acid removal test. Acetic acid removal ratios after 3 hrs and 1000 hrs were determined according to the following equation:

```
Acetic acid removal ratio=100×[(acetic acid volume
concentration at the reactor entrance)-(acetic acid volume
concentration at the reactor exit)]/(acetic acid volume
concentration at the reactor entrance).
```

The results are shown in Table 1, along with the above numerical value, A/B, as an index of whether a catalyst component (A) and a noble metal are uniformly present in the catalyst layer or not.

Table 1

| | Catalyst Composition | Content Ratio | | Acetic Acid Removal Ratio (%) | |
|---|---|---|---|---|---|
| | | Component (A) (A/B)* | Noble Metal (A/B) | After 3 hrs | After 1000 hrs |
| Example 1 (Catalyst 1) | Pt/Al-W | 1.28 | 1.26 | 97 | 91 |
| Example 2 (Catalyst 2) | Pt-Pd/Al-W | 1.24 | 1.14 | 98 | 92 |
| Example 3 (Catalyst 3) | Pt-Pd/Al-W-La | 1.17 | 1.10 | 99 | 97 |
| Example 4 (Catalyst 4) | Pt-Pd/Al-W-Ce | 1.22 | 1.11 | 99 | 98 |

(continued)

| | Catalyst Composition | Content Ratio | | Acetic Acid Removal Ratio (%) | |
|---|---|---|---|---|---|
| | | Component (A) (A/B)* | Noble Metal (A/B) | After 3 hrs | After 1000 hrs |
| Example 5 (Catalyst 5) | Pt-Pd/Al-Ce | 1.20 | 1.17 | 94 | 66 |
| Example 6 (Catalyst 6) ** | Pt/Al-W | 1.04 | 1.43 | 95 | 45 |
| Example 7 (Catalyst 7) ** | Pt/W/Al | 1.57 | 1.05 | 95 | 36 |
| Comparative Example 1 (Catalyst 8) | Pt/Al | - | 1.04 | 91 | 15 |
| *: A/B of W in Examples 1 to 4, 6 and 7 A/B of Ce in Example 5 **:Referential Examples not according to but for better understanding the invention | | | | | |

**Claims**

1.  A catalyst for treating an organic acid-containing exhaust gas, which comprises a layer of a refractory inorganic oxide selected from alumina or activated alumina supported on a refractory three-dimensional structure body;
    at least one catalyst component (A) selected from the group consisting of an oxide of only Ce, an oxide of only W, a complex oxide of W and La, or a complex oxide of W and Ce; and at least one noble metal component (B) selected from the group consisting of Pt, Pd, Rh, Ru, Ir and Au;
    wherein said catalyst component (A) and said noble metal component (B) are uniformly present in the layer of the refractory inorganic oxide,
    and the ratio of A to B (A/B) of the catalyst component (A) is 0.7/1 to 1.3/1 and the ratio of A to B (A/B) of the noble metal component (B) is 0.7/1 to 1.3/1,
    wherein A is the mass amount of the component (A) or (B) present in a region down to (1/4) T (one fourth of T) (mm) from the layer surface, and B is the mass amount of the component (A) or (B) present in a region from (1/4) T (one fourth of T) (mm) to (1/2) T (a half of T) (mm) from the layer surface, said T being the thickness of the refractory inorganic oxide layer in millimeters.

2.  The catalyst for treating an organic acid-containing exhaust gas according to claim 1, wherein said noble metal component (B) is only Pt, or a combination of Pt and Pd.

3.  A method for producing the catalyst for treating an organic acid-containing exhaust gas set forth in any one of claims 1 to 2, which comprises:

    mixing a refractory inorganic oxide and a precursor of the catalyst component (A) to obtain a slurry;
    coating a refractory three-dimensional structure body with the resulting slurry to form a refractory inorganic oxide layer on the refractory three-dimensional structure body; and
    supporting a noble metal component (B) selected from the group consisting of Pt, Pd, Rh, Ru, Ir and Au on the refractory inorganic oxide in said layer by impregnating the refractory three-dimensional structure body having the refractory inorganic oxide layer formed thereon with an aqueous solution of an amine complex or hydroxide of a noble metal, the pH of which has been adjusted to 7 to 14, and then calcining the impregnated structure.

4.  The method according to claim 3, wherein alumina as the refractory inorganic oxide is mixed with a precursor of the catalyst component (A) selected from the precursors comprising W alone, W-La, W-Ce and Ce alone, in an aqueous nitric acid solution.

5.  The method according to any of claims 3-4, wherein the refractory three-dimensional structure body having the refractory inorganic oxide layer formed thereon is impregnated with the aqueous solution of a noble metal-containing compound at 0 to 60°C for 10 to 120 minutes, followed by drying in air flow at 80 to 200°C for 1 to 10 hours, and then calcining at a temperature in the range of 200 to 800°C for 1 to 10 hours.

6. A method for treating an organic acid-containing exhaust gas which comprises contacting an organic acid-containing exhaust gas with a catalyst as set forth in any of claims 1-2 to decompose the organic acid contained in the exhaust gas.

7. The method for treating an organic acid-containing exhaust gas according to claim 6, wherein said organic acid is a carboxylic acid having 1 to 6 carbon atoms.

8. The method for treating an organic acid-containing exhaust gas according to claim 7, wherein said organic acid is acetic acid.

9. The method for treating an organic acid-containing exhaust gas according to any one of claims 6 to 8, wherein the exhaust gas is contacted with the catalyst at a temperature in the range of 250 to 700°C.

**Patentansprüche**

1. Ein Katalysator zur Behandlung eines organischen säurehaltigen Abgases, welcher umfasst
eine Schicht aus einem feuerfesten anorganischen Oxid, ausgewählt aus Aluminiumoxid oder aktiviertem Aluminiumoxid, das auf einem feuerfesten dreidimensionalen Strukturkörper geträgert ist;
mindestens eine Katalysatorkomponente (A) ausgewählt aus der Gruppe bestehend aus einem Oxid nur von Ce, einem Oxid nur von W, einem komplexen Oxid von W und La oder einem komplexen Oxid von W und Ce;
und mindestens eine Edelmetallkomponente (B) ausgewählt aus der Gruppe bestehend aus Pt, Pd, Rh, Ru, Ir und Au;
wobei die Katalysatorkomponente (A) und die Edelmetallkomponente (B) gleichmässig in der Schicht des feuerfesten anorganischen Oxids vorhanden sind,
und das Verhältnis von A zu B (A/B) der Katalysatorkomponente (A) 0,7/1 bis 1,3/1 beträgt,
und das Verhältnis von A zu B (A/B) der Edelmetallkomponente (B) 0,7/1 bis 1,3/1 beträgt,
wobei A die Massenmenge der in einem Bereich bis zu (1/4) T (ein Viertel T) (mm) von der Schichtoberfläche vorliegenden Komponente (A) oder (B) ist, und B die Massenmenge der in einem Bereich von (1/4) T (ein Viertel T) (mm) bis (1/2) T (eine Hälfte T) (mm) von der Schichtoberfläche vorliegenden Komponente (A) oder (B) ist, wobei T die Dicke der feuerfesten anorganischen Oxidschicht in Millimetern ist.

2. Katalysator zur Behandlung eines organischen säurehaltigen Abgases nach Anspruch 1, **dadurch gekennzeichnet, dass** die Edelmetallkomponente (B) nur Pt oder eine Kombination aus Pt und Pd ist.

3. Verfahren zur Herstellung des Katalysators zur Behandlung eines organischen, säurehaltigen Abgases nach einem der Ansprüche 1 bis 2, **dadurch gekennzeichnet, dass** es umfasst:

   - Mischen eines feuerfesten anorganischen Oxids und eines Vorläufers der Katalysatorkomponente (A) unter Erhalt einer Aufschlämmung;
   - Beschichten eines feuerfesten dreidimensionalen Strukturkörpers mit der resultierenden Aufschlämmung zu einer feuerfesten anorganischen Oxidschicht auf dem feuerfesten dreidimensionalen Strukturkörper; und
   - Trägern einer Edelmetallkomponente (B), die ausgewählt ist aus der Gruppe bestehend aus Pt, Pd, Rh, Ru, Ir und Au auf dem feuerfesten anorganischen Oxid in der Schicht durch Imprägnieren des feuerfesten dreidimensionalen Strukturkörpers mit der darauf gebildeten feuerfesten anorganischen Oxidschicht mit einer wässrigen Lösung eines Aminkomplexes oder -hydroxids eines Edelmetalls, deren pH-Wert auf 7 bis 14 eingestellt ist, und anschliessendes
   - Kalzinieren der imprägnierten Struktur.

4. Verfahren nach Anspruch 3, wobei Aluminiumoxid als feuerfestes anorganisches Oxid mit einem Vorläufer der Katalysatorkomponente (A), ausgewählt aus den Vorläufern, umfassend W allein, W-La, W-Ce und Ce allein, in einer wässrigen Salpetersäurelösung gemischt wird.

5. Verfahren nach einem der Ansprüche 3 bis 4, **dadurch gekennzeichnet, dass** der feuerfeste dreidimensionale Strukturkörper mit der darauf gebildeten feuerfesten anorganischen Oxidschicht mit der wässrigen Lösung einer edelmetallhaltigen Verbindung bei 0 bis 60°C für 10 bis 120 Minuten imprägniert wird, gefolgt von Trocknen im Luftstrom bei 80 bis 200°C für 1 bis 10 Stunden und anschliessendes Kalzinieren bei einer Temperatur im Bereich von 200 bis 800°C für 1 bis 10 Stunden.

**6.** Verfahren zur Behandlung eines organischen, säurehaltigen Abgases, **dadurch gekennzeichnet, dass** man ein organisches, säurehaltiges Abgas mit einem Katalysator gemäss einem der Ansprüche 1 bis 2 in Kontakt bringt, um die im Abgas enthaltene organische Säure zu zersetzen.

**7.** Verfahren zur Behandlung eines organischen, säurehaltigen Abgases nach Anspruch 6, **dadurch gekennzeichnet, dass** die organische Säure eine Carbonsäure mit 1 bis 6 Kohlenstoffatomen ist.

**8.** Verfahren zur Behandlung eines organischen, säurehaltigen Abgases nach Anspruch 7, **dadurch gekennzeichnet, dass** die organische Säure Essigsäure ist.

**9.** Verfahren zur Behandlung eines organischen, säurehaltigen Abgases nach einem der Ansprüche 6 bis 8, wobei das Abgas mit dem Katalysator bei einer Temperatur im Bereich von 250 bis 700°C in Kontakt gebracht wird.

**Revendications**

**1.** Catalyseur pour traiter un gaz d'échappement contenant un acide organique, qui comprend une couche d'un oxyde inorganique réfractaire choisi parmi l'alumine ou l'alumine activée supportée sur un corps de structure tridimensionnelle réfractaire ;
au moins un composant catalyseur (A) choisi dans le groupe constitué par un oxyde de Ce uniquement, un oxyde de W uniquement, un oxyde complexe de W et La, ou un oxyde complexe de W et Ce ; et au moins un composant de métal noble (B) choisi dans le groupe constitué par Pt, Pd, Rh, Ru, Ir et Au ;
où ledit composant catalyseur (A) et ledit composant de métal noble (B) sont uniformément présents dans la couche de l'oxyde inorganique réfractaire,
et le rapport de A sur B (A/B) du composant catalyseur (A) est de 0,7/1 à 1,3/1
et le rapport de A sur B (A/B) du composant de métal noble (B) est de 0,7/1 à 1,3/1,
où A est la quantité de masse du composant (A) ou (B) présent dans une région descendant jusqu'à (1/4) T (un quart de T) (mm) de la surface de la couche, et B est la quantité de masse du composant (A) ou (B) présent dans une région de (1/4) T (un quart de T) (mm) à (1/2) T (la moitié de T) (mm) de la surface de la couche, T étant l'épaisseur de la couche d'oxyde inorganique réfractaire en millimètres.

**2.** Catalyseur pour traiter un gaz d'échappement contenant un acide organique selon la revendication 1, dans lequel ledit composant de métal noble (B) est uniquement du Pt, ou une combinaison de Pt et de Pd.

**3.** Procédé de production du catalyseur pour traiter un gaz d'échappement contenant un acide organique selon l'une quelconque des revendications 1 à 2, qui comprend :

un mélange d'un oxyde inorganique réfractaire et d'un précurseur du composant catalyseur (A) pour obtenir une suspension ;
un revêtement d'un corps de structure tridimensionnelle réfractaire avec la suspension résultante pour former une couche d'oxyde inorganique réfractaire sur le corps de structure tridimensionnelle réfractaire ; et
une mise en support d'un composant de métal noble (B) choisi dans le groupe constitué par Pt, Pd, Rh, Ru, Ir et Au sur l'oxyde inorganique réfractaire dans ladite couche par imprégnation du corps de structure tridimensionnelle réfractaire ayant la couche d'oxyde inorganique réfractaire formée sur celui-ci avec une solution aqueuse d'un complexe d'amine ou d'un hydroxyde d'un métal noble, dont le pH a été ajusté de 7 à 14, puis par calcination de la structure imprégnée.

**4.** Procédé selon la revendication 3, dans lequel l'alumine en tant qu'oxyde inorganique réfractaire est mélangée avec un précurseur du composant catalyseur (A) choisi parmi les précurseurs comprenant W seul, W-La, W-Ce et Ce seul, dans une solution aqueuse d'acide nitrique.

**5.** Procédé selon l'une quelconque des revendications 3-4, dans lequel un corps de structure tridimensionnelle réfractaire sur lequel est formée la couche d'oxyde inorganique réfractaire est imprégné avec la solution aqueuse d'un composé contenant un métal noble entre 0 à 60 °C pendant 10 à 120 minutes, suivi d'un séchage dans un flux d'air entre 80 à 200°C pendant 1 à 10 heures, puis d'une calcination à une température dans la plage de 200 à 800 °C pendant 1 à 10 heures.

**6.** Procédé de traitement d'un gaz d'échappement contenant un acide organique qui comprend la mise en contact d'un gaz d'échappement contenant un acide organique avec un catalyseur selon l'une quelconque des revendications 1-2 pour décomposer l'acide organique contenu dans le gaz d'échappement.

7. Procédé de traitement d'un gaz d'échappement contenant un acide organique selon la revendication 6, où ledit acide organique est un acide carboxylique ayant 1 à 6 atomes de carbone.

8. Procédé de traitement d'un gaz d'échappement contenant un acide organique selon la revendication 7, où ledit acide organique est l'acide acétique.

9. Procédé de traitement d'un gaz d'échappement contenant un acide organique selon l'une quelconque des revendications 6 à 8, où le gaz d'échappement est mis en contact avec le catalyseur à une température dans la plage de 250 à 700°C.

FIG.1

EPMA Count

Pt

W

Position Analyzed in Cross-Section (mm)

0    0.1    0.2    0.3    0.4

T

1/2T

1/4T

# FIG.2

FIG.3

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000107602 A
- JP 2005144321 A
- JP 2000288347 A
- JP 2005270872 A
- US 5292704 A
- US 5895636 A
- US 6207120 B
- WO 2006095392 A
- US 6458741 A
- US 5492878 A